# FASCICULE DE BREVET EUROPEEN

(11) **EP 1 242 169 B1**
(45) Date de publication et mention de la délivrance du brevet: **23.03.2005**
(21) Numéro de dépôt: 00990029.1
(22) Date de dépôt: 29.12.2000
(51) Int. Cl.: B01D 67/00, B01D 69/02, B26F 1/31, B23K 26/00

(54) **PROCEDE DE CREATION DE PORES ET FILM MICROPOREUX**
VERFAHREN ZUR HERSTELLUNG VON POREN UND MIKROPORÖSER FILM
METHOD FOR CREATING PORES AND MICROPOROUS FILM

(30) Priorité: 29.12.1999 FR 9916656
(43) Date de publication de la demande: 25.09.2002
(73) Titulaire: UNIVERSITE CATHOLIQUE DE LOUVAIN, 1348 Louvain la Neuve (BE); Whatman S.A., 1348 Louvain-La-Neuve (BE)
(72) Inventeur: FERAIN, Etienne, B-7050 Masnuy Saint Jean (BE); LEGRAS, Roger, B-4280 Lens-Saint-Remy (BE); HANOT, Henri, B-5081 Saint-Denis (BE)
(74) Mandataire: Geismar, Thierry
(86) Numéro de dépôt international: PCT/EP2000/013407
(87) Numéro de publication internationale: WO 2001/049403

(56) Documents cités:
- WO-A-87/05850
- WO-A-98/30317
- US-A- 3 713 921
- US-A- 3 852 134

## Description

L'invention se rapporte à un procédé de création de pores dans un matériau polymère en feuilles.

L'invention se rapporte plus particulièrement à un procédé de création de pores de taille nanométrique, typiquement de l'ordre de moins de 200 nm dans un matériau polymère tel que du polycarbonate en feuille ou tout autre matériau équivalent.

On connaît déjà, dans l'art antérieur, différents procédés de création de pores de faible section dans des feuilles de matériau polymère, par exemple en vu de l'élaboration de membranes microporeuses pour l'épuration ou le filtrage de fluides industriels ou biologiques, ou pour le traitement des eaux.. ,

Ces procédés peuvent être regroupés selon trois grands types :
- un premier type de procédé, mécanique, comprenant au moins une étape d'estampage, tel que décrit par exemple dans le document US-A- 4 652 412 ;
- un deuxième type de procédé, comprenant au moins une irradiation au laser infra rouge CO₂ ou NdYAG, ou au laser pulsé, tel que décrit par exemple dans les documents US-A- 4 923 608, US-A- 3 742 182, WO-A- 98 30317 ;
- un troisième type de procédé, comprenant au moins une irradiation ionique suivie d'une attaque chimique.

Le procédé selon l'invention de création de pores dans un matériau tel que du polycarbonate en feuille appartient au troisième type général présenté ci dessus.

Pour ce type de procédé de création de pores, en vue de la réalisation de membranes de filtration, on peut se reporter par exemple aux documents suivants : DE-A- 4 319 610, US-A- 5 234 538, US-A- 3 713 921.

Le document US-A- 4 956 219, issu de la demanderesse, décrit un procédé de création de pores dans un matériau choisi parmi le groupe comprenant polyesters saturés tels que polytéréphtalate d'éthylène, les polyesters d'acide carbonique tels que du polycarbonate élaboré à partir de bis-phénol A (bis (hydroxy-4 phényl)-2,2 propane), les polyéthers aromatiques, les polysulfones, les polyoléfines, les acétates de cellulose et nitrates de cellulose.

Le matériau est irradié par un faisceau d'ions issus de préférence de gaz rares tel que l'argon, d'énergie voisine de 2MeV par nucléon, le faisceau ayant une intensité comprise entre 10⁶ et 10¹³ ions par seconde.

De tels faisceaux peuvent être obtenus par des accélérateurs de particules tels que des cyclotrons à secteurs séparés.

Le matériau se présente sous forme d'une bande défilant devant un faisceau d'ions, l'épaisseur de la bande étant de l'ordre de quelques centaines de nanomètres à 100 microns, la largeur de la bande étant comprise entre 5 et 150 centimètres.

Par déflexion magnétique, le faisceau d'ions effectue un balayage sinusoïdal, chaque portion de la bande étant irradiée à plusieurs reprises de sorte qu'une densité homogène de pores est obtenue sur toute la bande de matériau traitée.

Après irradiation, la bande de matériau est soumise éventuellement à un rayonnement ultra violet (UV).

A près ce traitement UV ou directement après bombardement ionique, un traitement chimique est effectué dans une solution corrosive éventuellement en présence d'un solvant organique.

Ainsi, par exemple, la bande de matériau est plongée dans une solution de soude caustique en présence de méthanol, d'éthanol ou d'isopropanol.

Une ou plusieurs étapes du procédé peuvent être réalisées en continu, éventuellement directement les unes à la suite des autres, la bande de matériau ayant défilé en regard du faisceau étant entraînée en continu dans la solution corrosive.

Après neutralisation, rinçage et séchage, une bande continue de matériau polymère microporeux est obtenue.

Le document US-A 3 852 134 décrit un procédé de bombardement ionique de film en polycarbonate de moins de vingt microns d'épaisseur, suivi d'une exposition à un rayonnement de longueur d'onde inférieur à 4000 Angstrôms, sous oxygène, avant première attaque chimique, recuit et seconde attaque chimique en vue d'obtenir des pores de diamètres compris entre 1000 et 100 000 Angströms.

Les procédés d'attaque préférentielle selon des directions définies par des défauts de structure moléculaire issus d'un bombardement ionique permettent d'élaborer des membranes filtrantes de qualité supérieure à celles des membranes issues d'autres procédés tels qu'estampage ou traitement laser.

Toutefois, le contrôle de la densité, de la forme et de la taille des pores obtenus reste délicat.

Ainsi, il a été constaté que les pores sont de diamètres variables de la surface vers le coeur de la membrane, présentant ainsi une forme de "cigare" (pour les membranes en polycarbonate, voir Schônenberger et. *Al*, J.Phys. Chem. B101, p. 5497-5505, 1997).

Ceci gêne notamment une bonne prédiction des propriétés de ces membranes au seul vu de leur surfaces, par exemple, au microscope électronique à balayage.

L'origine de cette forme des pores reste discutée.

Le document US-A 3 713 921 présente l'emploi d'un surfactant ajouté au réactif d'attaque pour atténuer ces variations de formes et de dimensions transversales des pores.

Certains auteurs invoquent une influence de l'épaisseur de la membrane et un contrôle imparfait des conditions d'attaque pour expliquer la forme en "cigares des pores.

L'invention se rapporte à un procédé de création de pores dans un matérial polymère en feuille, tel que du polycarbonate ou tout autre matériau équivalent ledit procédé permettant l'obtention de pores de forme générale cylindrique et lisse, sans variation notable de diamètre moyen de ces pores dans l'épaisseur des feuilles de matériau polymère traitées.

L'invention concerne également les membranes microporeuses élaborées à partir desdites feuilles de matériau polymère traitées.

L'invention se rapporte à un procédé de création de pores cylindriques, lisses et de taille nanométrique dans une feuille de matériau polymère, ledit procédé comprenant un bombardement ionique, un éventuel traitement UV et une attaque chimique, ledit procédé comprenant une pré-attaque chimique effectuée préalablement au bombardement ionique, pré-attaque réduisant l'épaisseur de la feuille de matériau polymère.

Le matériau polymère est choisi parmi le groupe comprenant les polyesters saturés tels que le polytéréphtalate d'éthylène, les polyesters d'acide carbonique tels que du polycarbonate élaboré à partir de bis-phénol A (bis(hydroxy-4 phényl)-2,2 propane), les polyéthers aromatiques, les polysulfones, les polyoléfines, les acétates de cellulose et nitrates de cellulose.

La feuille de matière polymère présente, avant pré-attaque, une épaisseur comprise entre quelques centaines de nanomètres et une centaine de microns.

Par exemple, la pré-attaque est conduite jusqu'à l'ablation d'une épaisseur pouvant atteindre 3 microns environ sur chaque face de ladite feuille.

Selon une réalisation particulière, la feuille est réalisée en un polycarbonate amorphe et présente une épaisseur de 25 microns environ avant pré-attaque. Selon une autre réalisation particulière, la feuille est réalisée en un polycarbonate cristallin et présente une épaisseur de 10 microns environ avant pré-attaque. Un traitement aux ultraviolets est effectué après le bombardement ionique e avant l'attaque chimique.

Le bombardement ionique est effectué par un faisceau d'ions issus de préférence de gaz rares tel que l'argon, d'énergie voisine de 2MeV par nucléon, la densité d'ions traversant le film polymère étant comprise entre 10⁴ et 10¹³ ions par centimètre carré.

Dans un mode de réalisation, l'attaque chimique est dite lente et est effectuée dans un bain contenant de la soude caustique à environ 0,5N en solution aqueuse, à une température d'environ 70°C durant environ 260 minutes.

Dans un autre mode de réalisation, l'attaque chimique est dite rapide et est effectuée dans un bain contenant de la soude caustique à environ 2N, en solution aqueuse, à une température d'environ 70°C, durant environ 30 minutes.

Dans une autre réalisation, le bain d'attaque chimique comprend, un solvant organique choisi parmi le groupe comprenant le méthanol, l'éthanol, l'isopropanol.

L'attaque chimique est effectuée en présence d'un surfactant.

Les films microporeux obtenus après attaque chimique sont lavés jusqu'à neutralisation du pH, rincés et séchés.

Le lavage des films microporeux est réalisé dans une solution aqueuse d'acide acétique à environ 15%, à une température d'environ 70°C, durant environ 15 minutes puis dans de l'eau déminéralisée, à une température d'environ 70°C, durant environ 15 minutes et plus, jusqu'à obtention d'un pH neutre.

Le procédé de création de pores de tailles nanométriques décrit ci-dessus est effectué en continu.

Le procédé permet d'obtenir un film microporeux en matériau polymère utilisé comme matrice ou comme filtre pour différentes applications incluant l'élaboration de filaments micrométriques en métal ou en polymère.

D'autres objets et avantages de l'invention apparaîtront au cours de la description de l'invention suivante de modes de réalisation, description qui va être effectuée en se référant aux dessins annexés dans lesquels :
- la figure 1 est un diagramme schématique représentant les étapes successives d'un procédé de création de pores dans un matériau polymère en feuille, selon un premier mode de réalisation de l'invention ;
- la figure 2 est un diagramme schématique représentant les étapes successives d'un procédé de fabrication de filaments métalliques, procédé de fabrication utilisant le matériau polymère en feuille traité conformément au procédé de création de pores tel que schématisé en figure 1 ;
- la figure 3 est un diagramme schématique présentant les étapes successives d'un procédé de fabrication de filaments en polymère, procédé de fabrication utilisant le matériau polymère en feuille traitée conformément au procédé de création de pores tel que schématisé en figure 1 ;

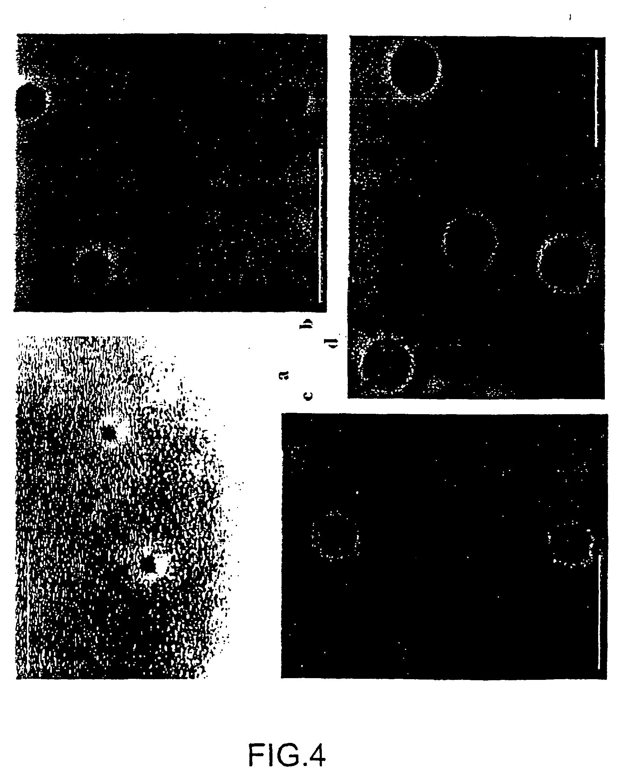

- la figure 4 est une photographie, prise au microscope électronique à balayage à effet de champs de la surface d'un film en polycarbonate traité selon le procédé de la figure 1, la barre d'échelle correspondant à une longueur de 200 nm ;
- la figure 5 est une photographie, prise au microscope électronique à balayage à effet de champs, de nanofilaments en cobalt obtenus par dépôt électrolytique dans les pores d'un film en polycarbonate selon le procédé schématisé en figure 2, la barre d'échelle de la figure 5 correspondant à une longueur de 5 microns ;
- la figure 6 est un graphique représentant les évolutions, en fonction du temps d'attaque "lente" de films en polycarbonate cristallin, de trois paramètres, à savoir : la valeur moyenne des diamètres des filaments en leur partie médiane (MWD), la valeur moyenne des diamètres des pores en leur orifice (MPS), la moyenne des tailles des pores (APS) ;
- la figure 7 est un graphique représentant les évolutions, en fonction du temps d'attaque "rapide" de films en polycarbonate cristallin, de deux paramètres, à savoir : la valeur moyenne des diamètres des pores en leur orifice (MPS) et la valeur moyenne des diamètres des filaments en leur partie médiane (MWD) ;
- la figure 8 est un graphique représentant les évolutions des paramètres MPS et MWD définis ci-dessus, en fonction du temps d'attaque, dans le cas d'une attaque "rapide" de films en polycarbonate amorphe non pré-attaqués et faiblement pré-attaqués ;
- la figure 9 est un graphique représentant les évolutions des paramètres APS, MPS et MWD définis ci-dessus, en fonction du temps d'attaque "lente" de films en polycarbonate amorphe profondément pré-attaqués ;
- la figure 10 est une vue au microscope électronique à balayage à effet de champs de parties extrêmes de nanofilaments métalliques obtenus par dépôt électrolytique dans un film microporeux en polycarbonate cristallin;
- la figure 11 rassemble deux vues au microscope électronique à balayage à effet de champs de portions de nanofilaments obtenus par dépôt électrolytique dans un film microporeux en polycarbonate , en figure 11a à partir d'un film en polycarbonate cristallin, en figure 11b à partir d'un film en polycarbonate amorphe (barre d'échelle : 5 microns) ;
- la figure 12 est une vue au microscope électronique à balayage à effet de champs de nanofilaments en polypyrrole obtenus par dépôt électrolytique dans un film en polycarbonate amorphe profondément pré-attaqué, selon un mode de réalisation du procédé de la figure 3.
- la figure 13 est un graphe montrant les variations de l'écart type des distributions des tailles de pores pour des films en polycarbonate cristallin et pour des films en polycarbonate amorphe fortement pré-attaqués ;
- la figure 14 est un graphe montrant les variations de l'épaisseur de films non soumis au bombardement ionique, en fonction du temps d'attaque chimique, les ou en polycarbonate cristallin.

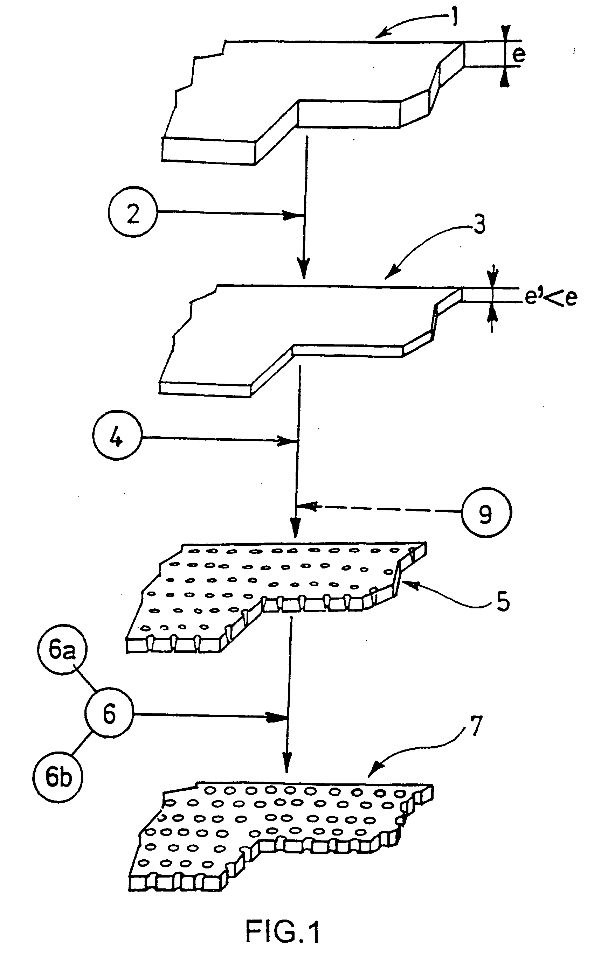

On se rapporte tout d'abord à la figure 1.

Le procédé de création de pores dans un film polymère initial 1, tel que schématisé en figure 1, comprend trois étapes successives :
- une pré-attaque chimique 2 du film initial 1, produisant un film pré-attaqué 3 d'épaisseur « e' » inférieure à celle « e » du film initial 1 ;
- un bombardement ionique 4 du film pré-attaqué 3, produisant un film irradié 5 ;
- une attaque chimique 6 du film irradié 5.

Le film polymère initial 1 peut être élaboré en un matériau choisi parmi le groupe comprenant les polyesters saturés tels que polytéréphtalate d'éthylène, les polyesters d'acide carbonique tels que polycarbonate élaboré à partir de bis-phénol A (bis (hydroxy-4 phényl)-2,2 propane, les polyéthers aromatiques, les polysulfones, les polyoléfines, les acétates de cellulose et nitrates de cellulose.

Dans la suite de la description, seuls seront décrits les résultats obtenus avec du polycarbonate.

Deux grades de polycarbonate élaborés à partir de bis-phénol A seront considérés : un polycarbonate cristallin (dit PCc par la suite, à fins de simplification) et un polycarbonate amorphe (dit PCa).

Comme PCc, un film de 10 microns d'épaisseur, vendu sous la marque Makrofol ™ par la société BAYER est utilisé dans les exemples ci-dessous détaillés. Ce film Makrofol ™ est élaboré par moulage, cristallisation et étirement longitudinal.

Comme PCa, un film de 25 microns d'épaisseur, vendu sous la marque Lexan ™ par la société GENERAL ELECTRIC est utilisé dans les exemples ci-dessous détaillés.

Deux pré-attaques chimiques 2 seront considérées dans les exemples détaillés ci-dessous : une pré-attaque « légère » dite Préal et une pré-attaque « intense » dite Préai.

Le bombardement ionique 4 est effectué, dans un mode de réalisation, par un faisceau d'ions issus de préférence de gaz rares tel que l'argon, d'énergie voisine de 2MeV par nucléon, le faisceau ayant une intensité comprise entre 10⁶ et 10¹³ ions par seconde.

De tels faisceaux peuvent être obtenus par des accélérateurs de particules tels que des cyclotrons à secteurs séparés.

Le film pré-attaqué 3 se présente, dans un mode de réalisation, sous forme d'une bande défilant sensiblement perpendiculairement au faisceau d'ions, l'épaisseur de la bande étant de l'ordre de quelques centaines de nanomètres à 100 microns, la largeur de la bande étant comprise entre 5 et 150 centimètres.

Par déflexion magnétique ou tout autre procédé équivalent, le faisceau d'ion effectue un balayage par exemple sinusoïdal ou carré, triangulaire, chaque portion de la bande irradiée à plusieurs reprises de sorte qu'une densité homogène de pores est obtenue sur toute la bande de film irradié 5.

Le film irradié 5 est soumis à l'attaque chimique 6, effectuée dans une solution corrosive éventuellement en présence d'un solvant organique.

Ainsi, par exemple, le film irradié 5 est plongé dans une solution de soude caustique en présence de méthanol, d'éthanol ou d'isopropanol.

Le bombardement ionique 4 et/ou l'attaque chimique 6 peuvent être réalisés en continu, éventuellement l'un directement à la suite de l'autre, la bande de film pré-attaqué 3 ayant défilé en regard du faisceau d'ions étant entraînée en continu dans la solution corrosive.

Après neutralisation, rinçage et séchage, un film continu de matériau polymère microporeux 7 est obtenu.

Dans une variante de réalisation de l'attaque chimique 6, un tensioactif est ajouté à la solution de soude pour améliorer le mouillage du film irradié 5 durant l'attaque chimique 6.

Dans une variante de réalisation, un traitement aux ultra violets 9 est effectué après bombardement ionique 4 et avant l'attaque chimique 6.

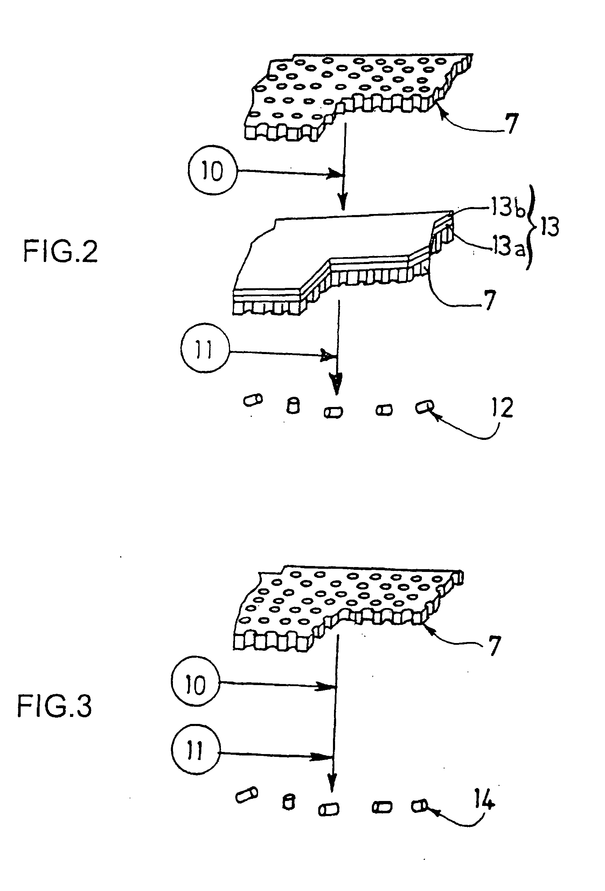

On se rapporte maintenant aux figures 2 et 3.

Le film polymère microporeux 7 est soumis à une électrolyse 10.

Puis par dissolution 11 de la matrice polymère du film microporeux 7, des filaments métalliques 12 ou polymères 14 sont obtenus.

Ainsi qu'il a été dit plus haut, la mise en oeuvre conventionnelle des procédés d'attaque chimique 6 de films polymères ayant subit un bombardement ionique 4 conduit à la formation de pores de diamètres variables depuis la surface jusqu'au coeur du film.

Les inventeurs ont mené des investigations poussées afin tant de proposer une explication à cette forme irrégulière des pores que de proposer un procédé de fabrication de films polymères microporeux 7 dont les pores présentent une forme générale cylindrique et dont les parois sont lisses.

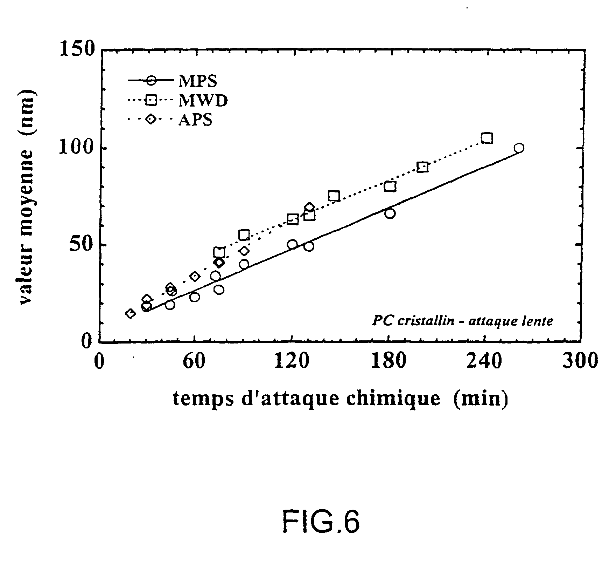

Les résultats expérimentaux obtenus vont être présentés ci-dessous en référence à des modes de réalisation de l'invention et en référence aux figures 6 à 14.

Un film initial de PCa de marque Lexan ™ a été soumis à une pré-attaque 2 légère Préal de sorte à enlever une épaisseur de 0,5 microns sur chaque face du film.

Un film initial de PCa de marque Lexan™ a été soumis à une pré-attaque intense Préai de sorte à enlever une épaisseur de 2,0 microns sur chaque face du film.

Les épaisseurs enlevées ont été mesurées par gravimètrie.

Les films pré-attaqués 3 ont été ensuite soumis à un bombardement ionique 4, au Centre de Recherche du Cyclotron, à Louvain-la-Neuve.

Des ions Ar⁹⁺ ont été utilisés, sous une tension d'accélération de 5,5MeV/amu.

Les films bombardés ont ensuite été soumis à un rayonnement ultra violet 9.

Les films irradiés 5 ainsi obtenus ont ensuite été soumis à une attaque chimique 6 selon deux modalités:
- une attaque chimique 6a dite « lente », dans un bain contenant de la soude caustique à environ 0,5 N en solution aqueuse, à une température d'environ 70°C durant environ 260mn ;
- une attaque chimique 6b dite « rapide », dans un bain contenant de la soude caustique à environ 2N, en solution aqueuse, à une température d'environ 70°C durant environ 30mn ;

Dans les deux cas d'attaque chimique 6a, 6b, un surfactant a été ajouté à la solution pour augmenter le mouillage du film irradié 5 durant l'attaque.

Après l'attaque chimique 6a ou 6b les films microporeux 7 obtenus ont été lavés :
- dans une solution aqueuse d'acide acétique à environ 15% à une température d'environ 70°C durant environ 15 minutes ;
- puis dans de l'eau déminéralisée, à une température d'environ 70°C durant environ 15 minutes et plus, jusqu'à obtention d'un pH neutre.

Les films ont ensuite été revêtus de PVP pour accroître leur caractère hydrophile, puis séchés à l'air chaud.

Les films microporeux ont ensuite été soumis à une électrolyse 10 effectuée dans une cellule électrochimique à trois électrodes, à température ambiante, telle qu'une cellule de galvanoplastie, à compartiment en Téflon™ avec une contre électrode en platine et une électrode de référence au calomel.

Une bi-couche métallique 13, servant d'électrodes, est appliquée sur l'une des faces du film microporeux 7.

Cette bi-bouche 13 comprend :
- une première couche 13a, d'adhésion, de chrome, de 10 à 20nm d'épaisseur, directement appliquée sur l'une des faces du film microporeux 7 ;
- une seconde couche 13b, d'or, de 500nm à 1 micron d'épaisseur, appliquée sur la première couche 13a et en contact direct avec l'atmosphère.

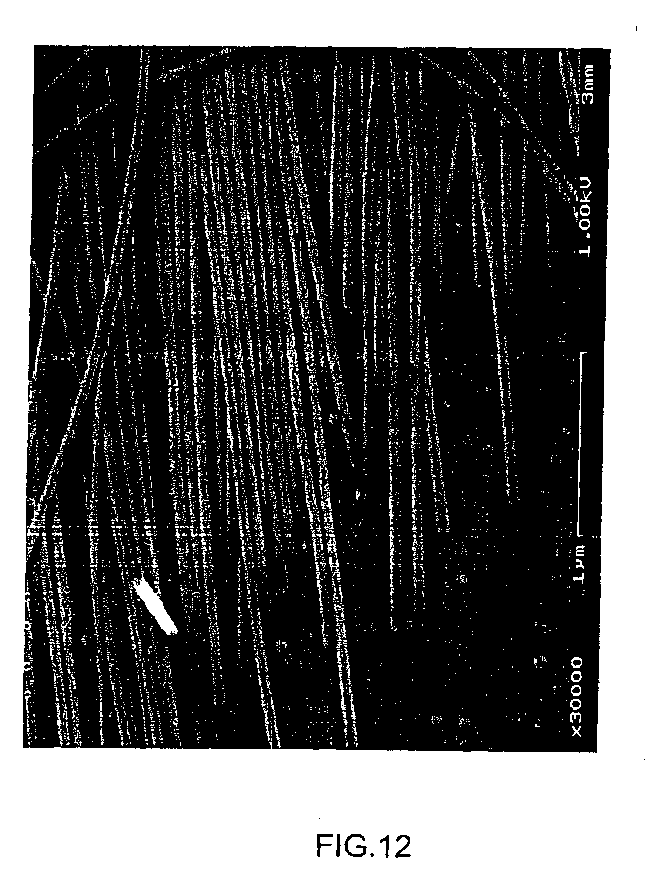

L'électrolyse 10 est réalisée dans l'exemple de réalisation ayant conduit aux filaments représentés en figure 12, avec une solution comprenant 0,1M de pyrrole et 0,1 M de LiClO₄, sous une différence de potentiel de +0,8V.

Au terme de la galvanoplastie, la matrice en polycarbonate des films microporeux est dissoute lors de l'étape 11, dans du dichlorométhane.

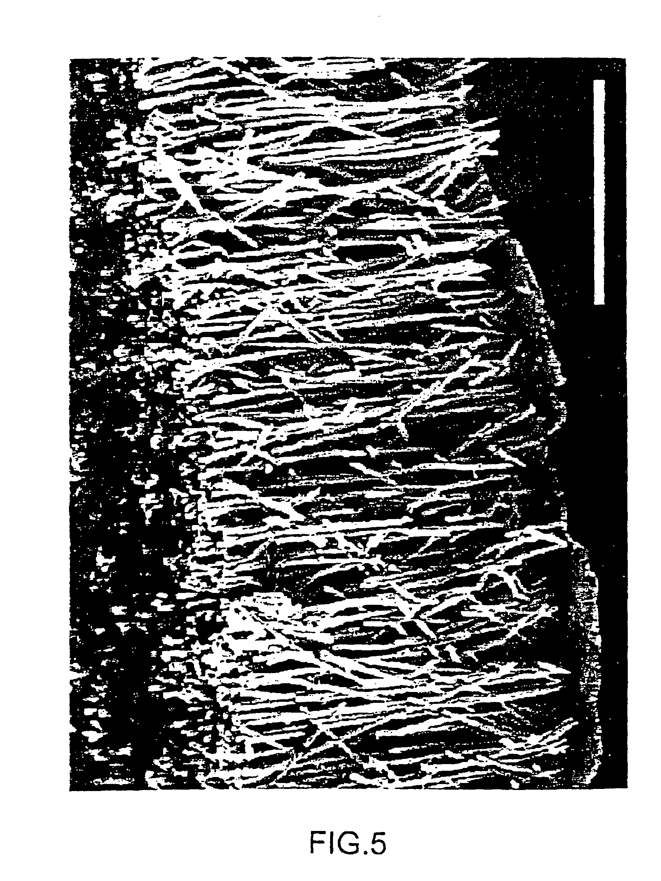

L'électrolyse 10 est réalisée dans l'exemple de réalisation ayant conduit aux filaments représentés en figure 5, avec une solution comprenant 50g/l de CoSO₄ et 30g/l de B(OH)₃, sous une différence de potentiel de -0,1V.

Au terme de la galvanoplastie, la matrice en polycarbonate des films microporeux est dissoute lors de l'étape 11, dans du dichlorométhane.

Les filaments obtenus, représentés en figure 5 ont été filtrés grâce à une membrane en argent.

Les films polymères microporeux et les filaments obtenus après l'étape 11 ont été observés au microscope électronique à effet de champs (DSM 982 Gemini de la société LEO).

Des images de résolution satisfaisante ont été obtenues pour des grandissements allant jusqu'à 200 000, sous tension d'accélération de 400V, sans dépôt métallique sur les échantillons à observer.

Les paramètres suivants ont été mesurés :
- diamètre moyen des filaments, à mi-longueur (MWD) :

- diamètre moyen des pores en surface de film microporeux 7 (MPS).

Un étalonnage, grâce à des nanosphères de diamètre moyen de 30nm (Calibrated nanosphères™ de la société Duke Scientific Corp.) a été effectué au préalable.

Par diffraction des rayons X aux petits angles (SAXS), une mesure de la distribution des tailles de pores contenus dans les membranes microporeuses 7 a été effectuée (E.Ferain, R.Legras, Nuclear Instruments and Method in Physics Research B131, 1997, p.97).

Une valeur moyenne de taille des pores (APS) et un écart type dans la distribution des diamètres de pores ont été déduits de ces mesures d'intensité du faisceau diffracté en fonction de l'angle de diffraction.

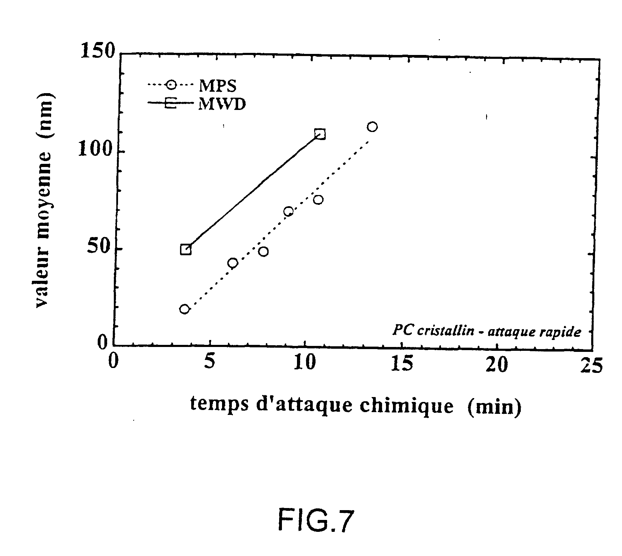

Les variations des paramètres MWD, MPS et APS définis ci-dessus, en fonction du temps d'attaque chimique 6 sont représentés en figure 6 et 7 pour les attaques lente 6a (figure 6) et rapide 6b (figure 7) d'un film en PCc de type Makrofol ™.

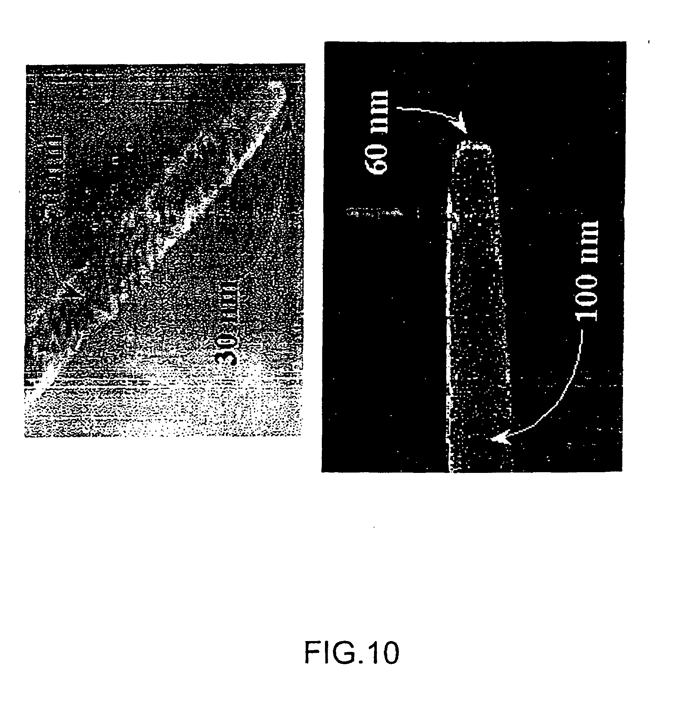

Il apparaît que :
- les filaments obtenus après l'étape 11 ont des diamètres MWD supérieurs à la taille des pores en surface des films microporeux 7, que l'attaque soit lente 6a ou rapide 6b et quel que soit le temps d'attaque considéré, les filaments obtenus présentant une forme "en cure-dents" telle que vue en figure 10 ;
- la différence entre les valeurs de diamètre des filaments MWD et les diamètres de pores en surface de film MPS est plus faible pour l'attaque lente 6a que pour l'attaque rapide 6b (15nm environ contre 30 nm environ) ;
- les variations des valeurs MPS et MWD, en fonction du temps d'attaque, sont semblables, pour un type d'attaque 6a, 6 b donné ;
- les valeurs moyennes de diamètres des pores dans le film PCc, après attaque lente 6a, mesurées par SAXS, sont comprises entre les valeurs de diamètres des filaments à mi-longueur MWD et les valeurs des diamètres des pores en surface de film MPS.

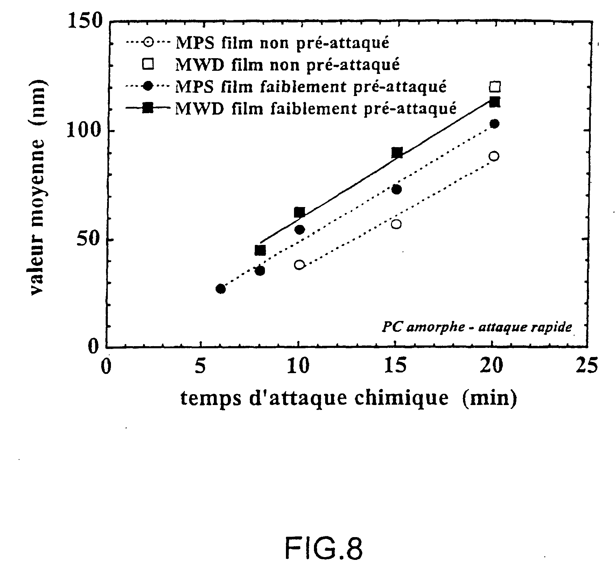

Les variations des paramètres MWD, MPS, en fonction du temps d'attaque, pour une attaque rapide 6b d'un film en PCa de type Lexan™ sont représentées en figure 8, pour des films ayant subis une pré-attaque légère Préal et pour des films non pré-attaqués.

Il apparaît que :
- une pré-attaque légère Préal réduit l'écart entre les valeurs des diamètres des filaments MWD et les valeurs des diamètres des pores en surface MPS, par rapport à un film non pré-attaqué (30nm environ contre 10 nm environ) ;
- la pré-attaque ne modifie pas le taux de variation de MPS ou MWD en fonction du temps d'attaque.

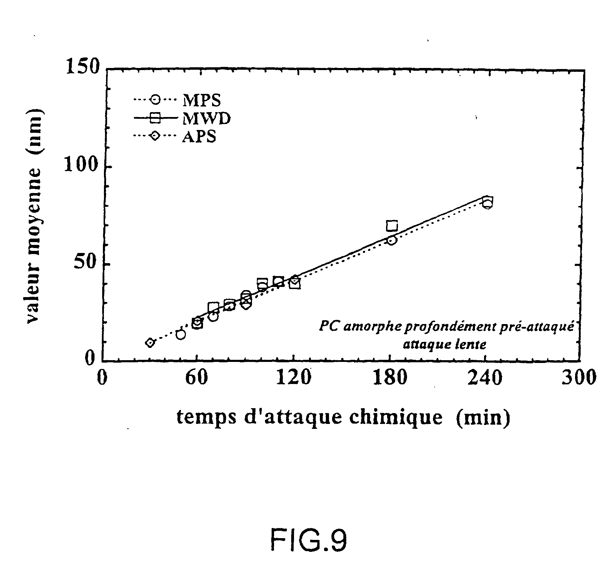

Les variations des paramètres MWD, MPS et APS, en fonction du temps d'attaque, pour une attaque lente 6a d'un film en PCa de type Lexan™ sont représentées en figure 9, pour des films ayant subis une pré-attaque intense Préai.

Il apparaît que les valeurs des paramètres MWD, MPS et APS sont sensiblement confondues, pour la gamme de temps d'attaque lente 6a considérée, de sorte que les pores formés dans le film peuvent être considérés comme cylindriques.

Les filaments en polypyrrole obtenus après dépôt électrolytique 10 dans les pores d'un film en PCa ayant subit une pré-attaque 2 intense Préai et dissolution 11 de ce film en polycarbonate présentent d'ailleurs une forme cylindrique très régulière, ainsi qu'il apparaît en figure 12.

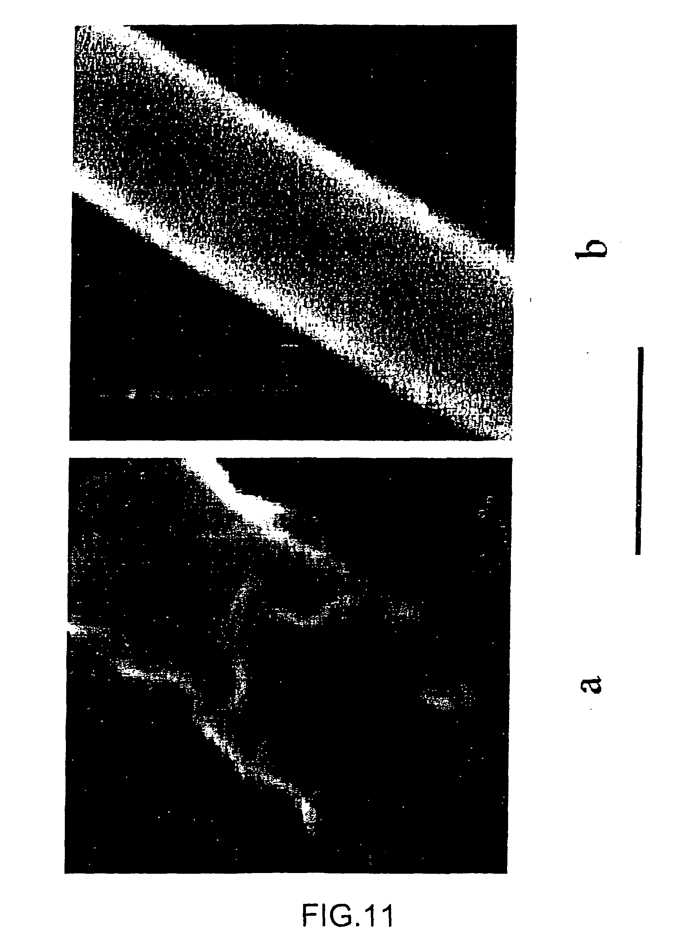

Les filaments obtenus à partir de PCa représentent une rugosité plus faible (figure 11b) que ceux obtenus à partir de PCc (figure 11a) , ainsi qu'il apparaît en figure 11.

Cette observation doit probablement être corrélée au caractère amorphe des films PCa type Lexan™ utilisés ici, conduisant à des irrégularités dans les chemins d'attaque chimique formant les pores, et au caractère semi-cristallin des films PCc type Makrofol™, les cristallites des films Makrofol™ conduisant à des irrégularités dans les domaines d'attaque chimique formant les pores.

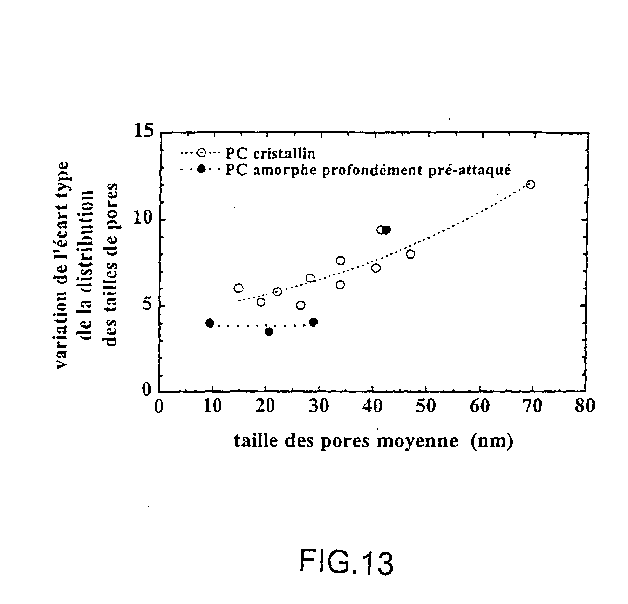

Les pores obtenus pour des films en PCa ayant subit une pré-attaque 2 intense Préai présentent des distributions de diamètres moyens à écarts types plus faibles que ceux obtenus pour les pores des films en PCc, ainsi qu'il apparaît en figure 13.

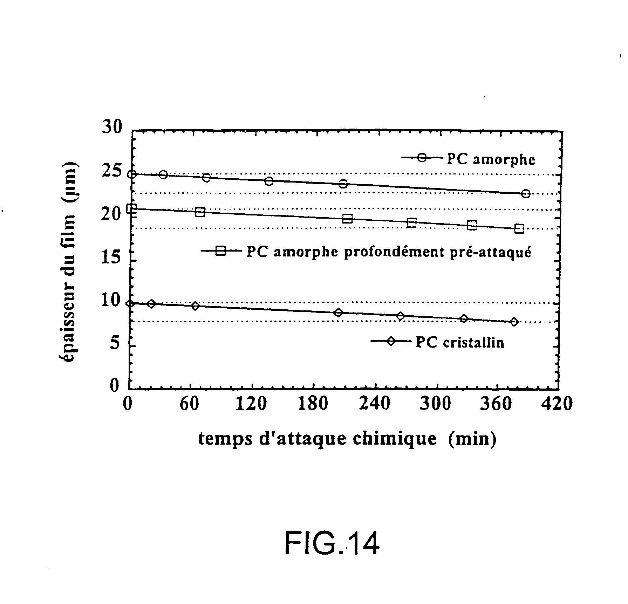

Ainsi que le montre la figure 14, les pertes d'épaisseur mesurées par gravimétrie, pour des temps d'attaque croissants de films en PCa, PCc et PCa fortement pré-attaqués, non soumis au bombardement ionique 4, sont sensiblement identiques pour les deux premiers microns d'épaisseur des films.

Par conséquent, il ne semble pas exister de couches superficielles plus résistantes à l'attaque chimique 6, contrairement aux hypothèses parfois retenues dans la littérature.

Au total, les résultats expérimentaux ci-dessus présentés ont permis d'établir une forte influence positive d'une pré-attaque 2 des films 1 avant bombardement ionique 4, cette pré-attaque 2 permettant l'obtention de pores sensiblement cylindriques et non en « cure-dents » ou en « cigares » comme dans les procédés antérieurs.

Cette influence de la pré-attaque 2 reste d'origine précise indéterminée.

La géométrie des pores obtenus permet la réalisation de nanofilaments ou nanotubes en métal 12 ou en polymère 14, ces filaments 12,14, pouvant avoir une surface lisse et une forme cylindrique sur des longueurs variant entre quelques nanomètres et plusieurs dizaines de microns.

De tels nanofilaments ou nanotubes sont de très grand intérêt pour des applications électroniques, optiques ou biomédicales par exemple.

Par ailleurs, le contrôle précis de la porosité tridimensionnelle dans des films en polymère permet la réalisation de filtres très utiles dans les domaines médicaux ou dans le traitement des eaux.

## Revendications

1. Procédé de création de pores de taille nanométrique dans une feuille de matériau polymère ledit procédé, comprenant un bombardement ionique (4), un traitement UV éventuel et une attaque chimique (6), **caractérisé en ce qu'**une pré-attaque chimique (2) est effectuée préalablement au bombardement ionique (4) de sorte à réduire l'épaisseur (e) de la feuille de matériau polymère (1).

2. Procédé selon la revendication 1, **caractérisé en ce que** le matériau polymère est choisi parmi le groupe comprenant les polyesters saturés tels que polytéréphtalate d'éthylène, les polyesters d'acide carbonique tels que polycarbonate élaboré à partir de bis-phénol A (bis (hydroxy-4 phényl)-2,2 propane), les polyéthers aromatiques, les polysulfones, les polyoléfines, les acétates de cellulose et nitrates de cellulose.

3. Procédé selon la revendication 1 ou 2, **caractérisé en ce que** la feuille de matière polymère (1) présente avant pré-attaque une épaisseur (e) comprise entre quelques centaines de nanomètres et une centaine de microns.

4. Procédé selon la revendication 3, **caractérisé en ce que** la pré-attaque (2) est conduite jusqu'à l'ablation d'une épaisseur pouvant atteindre 3 microns environ sur chaque face de ladite feuille (1).

5. Procédé selon l'une quelconque des revendications 1 à 4, **caractérisé en ce que** le matériau polymère est un polycarbonate amorphe ou cristallin.

6. Procédé selon la revendication 5, **caractérisé en ce que** la feuille est réalisée en un polycarbonate amorphe et présente une épaisseur (e) de 25 microns environ avant pré-attaque (2).

7. Procédé selon la revendication 5, **caractérisé en ce que** la feuille est réalisée en un polycarbonate cristallin, et présente une épaisseur (e) de 10 microns environ avant pré-attaque (2).

8. Procédé selon l'une quelconque des revendications 1 à 7, **caractérisé en ce qu'**un traitement aux ultraviolets (9) est effectué après le bombardement ionique (4) et avant l'attaque chimique (6).

9. Procédé selon l'une quelconque des revendications précédentes, **caractérisé en ce que** le bombardement ionique (4) est effectué par un faisceau d'ions issus de préférence de gaz rares tel que l'argon, d'énergie voisine de 2MeV par nucléon, la densité d'ions traversant le film polymère étant comprise entre 10⁴ et 10¹³ ions par centimètre carré.

10. Procédé selon l'une quelconque des revendications 6 à 9, **caractérisé en ce que** l'attaque chimique (6) est dite lente (6a) et est effectuée dans un bain contenant de la soude caustique à environ 0,5N en solution aqueuse, à une température d'environ 70°C durant environ 260mn.

11. Procédé selon l'une quelconque des revendications 6 à 9, **caractérisé en ce que** l'attaque chimique (6) est dite rapide (6b) et est effectuée dans un bain contenant de la soude caustique à environ 2N, en solution aqueuse, à une température d'environ 70°C durant environ 30mn.

12. Procédé selon la revendication 10 ou 11, **caractérisé en ce que** le bain d'attaque chimique (6) comprend un solvant organique.

13. Procédé selon la revendication 12, **caractérisé en ce que** le solvant organique est choisi parmi le groupe comprenant le méthanol, l'éthanol, l'isopropanol.

14. Procédé selon l'une quelconque des revendications 10 à 13, **caractérisé en ce que** l'attaque chimique (6) est effectuée en présence d'un surfactant.

15. Procédé selon l'une quelconque des revendications 6 à 14, **caractérisé en ce que** les films microporeux (7) obtenus après l'attaque chimique (6) sont lavés jusqu'à neutralisation du pH, rincés et séchés.

16. Procédé selon la revendication 15, **caractérisé en ce que** le lavage des films microporeux (7) est réalisé dans une solution aqueuse d'acide acétique à environ 15%, à une température d'environ 70°C durant environ 15 minutes, puis dans de l'eau démiralisée, à une température d'environ 70°C durant environ 15 minutes et plus, jusqu'à obtention d'un pH neutre.

17. Procédé selon l'une quelconque des revendications précédentes, **caractérisé en ce qu'**il est effectué en continu.

## Patentansprüche

1. Verfahren zur Erzeugung von Poren manometrischer Größe in einem Blatt aus Polymermaterial, wobei das besagte Verfahren einen lonenbeschuss (4), eine eventuelle UV-Behandlung und einen chemischen Angriff (6) umfasst, **dadurch gekennzeichnet, dass** ein chemischer Vorangriff (2) vor dem lonenbeschuss (4) ausgeführt wird, um die Dicke (e) des Blatts aus Polymermaterial (1) zu reduzieren.

2. Verfahren nach Anspruch 1, **dadurch gekennzeichnet, dass** das Polymermaterial innerhalb der Gruppe ausgewählt wird, die die gesättigten Polyester wie Ethylpolyterephtalat, die Carbonsäure-Polyester wie aus BisPhenol A (Bis (Hyrdoxy-4 Phenol)-2,2 Propan) entwickeltes Polycarbonat, die aromatischen Polyether, die Polysulfone, den Polyolefine, die Celluloseacetate und die Cellulosenitrate umfasst.

3. Verfahren nach Anspruch 1 oder 2, **dadurch gekennzeichnet, dass** das Blatt aus Polymermaterial (1) vor dem Vorangriff eine Dicke (e) aufweist, die zwischen einigen Hundert Nanometern und einem Hundert Mikrometern liegt.

4. Verfahren nach Anspruch 3, **dadurch gekennzeichnet, dass** der Vorangriff (2) bis zur Ablation einer Dicke ausgeführt wird, die etwa 3 Mikrometer auf jeder Seite des besagten Blattes (1) erreichen kann.

5. Verfahren nach einem der Ansprüche 1 bis 4, **dadurch gekennzeichnet, dass** das Polymermaterial ein amorphes oder kristallines Polycarbonat ist.

6. Verfahren nach Anspruch 5, **dadurch gekennzeichnet, dass** das Blatt aus einem amorphen Polycarbonat realisiert wird und eine Dicke (e) von etwa 25 Mikrometern vor dem Vorangriff (2) aufweist.

7. Verfahren nach Anspruch 5, **dadurch gekennzeichnet, dass** das Blatt aus einem kristallinen Polycarbonat realisiert wird und eine Dicke (e) von etwa 10 Mikrometern vor dem Vorangriff (2) aufweist.

8. Verfahren nach einem der Ansprüche 1 bis 7, **dadurch gekennzeichnet, dass** eine Ultraviolettbehandlung (9) nach dem lonenbeschuss (4) und vor dem chemischen Angriff (6) ausgeführt wird.

9. Verfahren nach einem der vorhergehenden Ansprüche, **dadurch gekennzeichnet, dass** der lonenbeschuss (4) anhand eines lonenbündels ausgeführt wird, der vorzugsweise von seltenen Gasen wie Argon stammt, mit einer Energie bei 2MeV pro Nukleon, wobei die Dichtheit der lonen, die die Polymerfolie durchgehen, zwischen 10⁴ und 10¹³ lonen pro Quadratmeter beträgt.

10. Verfahren nach einem der Ansprüche 6 bis 9, **dadurch gekennzeichnet, dass** der chemische Angriff (6) ein sogenannter langsamer Angriff (6a) ist und in einem Bad ausgeführt wird, das kaustische Soda umfasst, mit etwa 0,5 N in wässriger Lösung, mit einer Temperatur von etwa 70° C und während einer Dauer von etwa 260 Minuten.

11. Verfahren nach einem der Ansprüche 6 bis 9, **dadurch gekennzeichnet, dass** der chemische Angriff (6) ein sogenannter schneller Angriff (6b) ist und in einem Bad ausgeführt wird, das kaustische Soda umfasst, mit etwa 2 N in wässriger Lösung, mit einer Temperatur von etwa 70° C und während einer Dauer von etwa 30 Minuten.

12. Verfahren nach Anspruch 10 oder 11, **dadurch gekennzeichnet, dass** das Bad des chemischen Angriffs (6) ein organisches Lösungsmittel umfasst.

13. Verfahren nach Anspruch 12, **dadurch gekennzeichnet, dass** das organische Lösungsmittel innerhalb der Gruppe ausgewählt wird, die Methanol, Äthanol und Isopropanol umfasst.

14. Verfahren nach einem der Ansprüche 10 bis 13, **dadurch gekennzeichnet, dass** der chemische Angriff (6) in Anwesenheit von einem Oberflächenbehandlungsmittel ausgeführt wird.

15. Verfahren nach einem der Ansprüche 6 bis 14, **dadurch gekennzeichnet, dass** die mikroporösen Folien (7), die nach dem chemischen Angriff (6) erhalten werden, bis zur Neutralisierung des pH-Wertes gewaschen, gespült und getrocknet werden.

16. Verfahren nach Anspruch 15, **dadurch gekennzeichnet, dass** das Waschen der mikroporösen Folie (7) in einer wässrigen Lösung mit etwa 15 % Acetsäure realisiert wird, bei einer Temperatur von etwa 70° C und während einer Dauer von etwa 15 Minuten und mehr, bis zur Erreichung eines neutralen pH-Wertes.

17. Verfahren nach einem der vorhergehenden Ansprüche, **dadurch gekennzeichnet, dass** es kontinuierlich ausgeführt wird.

## Claims

1. Method for creating nanometre sized pores in a film of polymer material, said method comprising an ion bombardment (4), possible UV treatment and a chemical attack (6), **characterised in that** a chemical pre-attack (2) is carried out previously by ion bombardment (4) so as to reduce the thickness (e) of the film of polymer material (1).

2. Method according to claim 1, **characterised in that** the polymer material is chosen from amongst the group including saturated polyesters such as ethylene polyterephthalate, carbonic acid polyesters such as polycarbonate produced from A bis-phenol (bis (hydroxy-4 phenyl)-2,2 propane), the aromatic polyethers, the polysulfones, the polyolefins, the cellulose acetates and the cellulose nitrates.

3. Method according to either one of claims 1 or 2, **characterised in that** the film of polymer material (1) has, before pre-attack, a thickness (e) comprised between several hundreds of nanometres and a hundred microns.

4. Method according to claim 3, **characterised in that** the pre-attack (2) is carried out until ablation of a thickness able to reach about 3 microns on each face of said film (1).

5. Method according to any one of claims 1 to 4, **characterised in that** the polymer material is an amorphous or crystalline polycarbonate.

6. Method according to claim 5, **characterised in that** the film is made of an amorphous polycarbonate and has a thickness (e) of about 25 microns before pre-attack (2).

7. Method according to claim 5, **characterised in that** the film is made in a crystalline polycarbonate and has a thickness (e) of about 10 microns before pre-attack (2).

8. Method according to any one of claims 1 to 7, **characterised in that** an ultraviolet treatment (9) is carried out after the ion bombardment (4) and before the chemical attack (6).

9. Method according to any one of the preceding claims, **characterised in that** the ion bombardment (4) is carried out by a beam of ions issuing preferably from rare gases such as argon, with energy close to 2MeV per nucleon, the density of ions crossing the polymer film being comprised between 10⁴ and 10¹³ ions per square centimetre.

10. Method according to any one of claims 6 to 9, **characterised in that** the chemical attack (6) is said to be slow (6a) and is carried out in a bath containing caustic soda at about 0.5N in aqueous solution, at a temperature of about 70°C for about 260min.

11. Method according to any one of claims 6 to 9, **characterised in that** the chemical attack (6) is said to be rapid (6b) and is carried out in a bath containing caustic soda at about 2N, in aqueous solution, at a temperature of about 70°C for about 30min.

12. Method according to either one of claims 10 or 11, **characterised in that** the bath for chemical attack (6) comprises an organic solvent.

13. Method according to claim 12, **characterised in that** the organic solvent is chosen from amongst the group including methanol, ethanol, isopropanol.

14. Method according to any one of claims 10 to 13, **characterised in that** the chemical attack (6) is carried out in the presence of a surfactant.

15. Method according to any one of claims 6 to 14, **characterised in that** the micro-porous films (7) obtained after the chemical attack (6) are washed until the pH is neutralised, rinsed and dried.

16. Method according to claim 15, **characterised in that** the washing of the micro-porous films (7) is carried out in an aqueous solution of acetic acid at about 15%, at a temperature of about 70°C for about 15 minutes, then in demineralised water, at a temperature of about 70°C for about 15 minutes or more, until a neutral pH is obtained.

17. Method according to any one of the preceding claims, **characterised in that** it is carried out on-line.
